# EUROPEAN PATENT APPLICATION

(11) **EP 4 451 150 A1**
(43) Date of publication of application: **23.10.2024**
(21) Application number: 24171766.9
(22) Date of filing: 22.04.2024
(51) Int. Cl.: G06F 21/55, H04L 9/40

(54) **APPARATUS AND METHOD FOR DETECTING AND MITIGATING ANOMALOUS ACCESS IN NETWORKED SYSTEMS**

(30) Priority: 21.04.2023 US 202318137774
(71) Applicant: Sentryonics, Lda, 1070-159 Lisboa (PT)
(72) Inventor: ALVES VIDAL DE SEABRA, Luís Miguel, 1070-159 LISBOA (PT); AMORIM FERRERA DE SOUSA, Pedro Miguel, 1070-159 LISBOA (PT)
(74) Representative: Patentree

(57) **Abstract**

The present disclosure relates to an apparatus and method for enhancing the security of networked systems through the use of decoy devices that simulate different network components, a processor for data analysis and machine learning model training, and the application of this model to effectively identify and respond to anomalous accesses across various industries and network types. Namely, to an apparatus and a method for securing electric vehicle charging networks through advanced detection and mitigation of anomalous accesses.

## Description

### TECHNICAL FIELD

The present disclosure relates to cybersecurity methods and systems, particularly to securing networked systems, i.e. computer networks, against unauthorized access and cyber-attacks, more in particular to securing electric vehicle charging networks or industrial networks against unauthorized access and cyber-attacks.

### BACKGROUND

With the increasing connectivity of devices and systems across different sectors, the security of networked infrastructures has become crucial. Traditional security measures often fail to dynamically address the sophisticated and evolving nature of cyber threats, leaving systems susceptible to unauthorized access and potential breaches.

Malicious actors often launch cyber-attacks to disable computers, steal data, or use a breached computer as a launch point for other attacks. Some types of cyber-attacks make unauthorized use of legitimate credentials to gain access to a network or devices connected on the network. Once access to the network has been gained, the malicious actor may perform various actions, such as stealing additional credentials (user names, passwords, etc.) which may be used to legitimately access other devices connected to the network. The malicious actor may also or alternatively attempt to steal other types of information such as credit card information, social security numbers, account numbers, etc. Some types of cyber-attacks include attempts to gain unauthorized access to systems and/or inject malicious code in various applications.

Nowadays, the infrastructure for electric vehicles expands, so does the need for advanced security measures to protect against evolving cyber threats. Current systems are often inadequate in detecting and preventing sophisticated attacks, leaving EV charging networks vulnerable to disruptions and unauthorized data access.

These facts are disclosed in order to illustrate the technical problem addressed by the present disclosure.

### GENERAL DESCRIPTION

The present disclosure relates to an apparatus and a method for enhancing security across various networked systems, namely to a securing electric vehicle charging networks against unauthorized access and cyber-attacks. It involves the use of decoy devices to simulate network components, a processor to analyse data gathered during interactions with these simulated components, and a machine learning model to detect and mitigate anomalous accesses efficiently. This proactive security approach adapts to diverse network environments and mitigates risks dynamically.

In an embodiment, the present disclosure also relates to an apparatus and a method that utilizes decoy devices within an EV charging network to gather data about potential unauthorized accesses or attacks. This data is then used to train a machine learning model that helps in identifying and responding to anomalous activities in real-time. Alternatively, an industrial network is used. An industrial network refers to the use of networking technologies and protocols to connect industrial devices and systems, such as sensors, controllers and other equipment, typically configured or used in a manufacturing environment. Further, another specialized or generic computer network may be used.

An apparatus for detecting and mitigating anomalous access in a computer network, comprising: a processor; and a memory on which is stored machine-readable instructions that when executed by the processor, cause the processor to:
determine, using a trained machine learning model, whether an access to a certain device is anomalous; and
based on a determination that the access to the certain device is anomalous, execute a computer network mitigation operation;
wherein the trained machine learning model has been previously trained by:
receiving data from a decoy device, wherein the data comprises:
   first information pertaining to an identity used by and a method by which an entity interfaced with the decoy device while the decoy device was using a first attack surface;
training the machine learning model using the received data, wherein the machine learning model is to identify anomalous access to devices.

It is disclosed an apparatus comprising: a processor; and a memory on which is stored machine-readable instructions that when executed by the processor, cause the processor to:
receive data from a decoy device, wherein the data comprises: first information pertaining to an identity used by and a method by which an entity interfaced with the decoy device while the decoy device was using a first attack surface; second information pertaining to an identity used by and a method by which the entity interfaced with the decoy device while the decoy device was using a second attack surface;
train a machine learning model using the received data, wherein the machine learning model is to identify anomalous access to devices;
determine, using the machine learning model, whether an access to a certain device is anomalous; and
based on a determination that the access to the certain device is anomalous, execute a mitigation operation.

In an embodiment, the instructions cause the processor to: receive additional data from the decoy device, wherein the additional data comprises additional information pertaining to an identity used by and a method by which the entity interfaced with the decoy device while the decoy device was using multiple additional attack surfaces; and train the machine learning model using the received additional data.

In an embodiment, wherein the first attack surface and the second attack surface each comprises at least one of a pathway, a vulnerability (e.g., by traffic volume, has to be online, live network), and a method that the entity used to gain access to the decoy device.

In an embodiment, training features comprise a pathway, a vulnerability, and/or a method that the entity used to gain access to the decoy device, and/or features of the pathway, vulnerability or access method; in particular, said pathway comprising a network protocol, a protocol handshake, a network session, a user login; in particular, said features comprising traffic volume, traffic size, access of non-existing or rarely used network resources; in particular, said features comprising manually-engineered features to capture quantities of interest in said pathway, vulnerability or access method; in particular, numerical parameters parametrized with training data of said pathway, vulnerability or access method.

In an embodiment, the decoy device is within a common organization as non-decoy devices and wherein the decoy device is to emulate one or more of the non-decoy devices.

In an embodiment, the organization comprises an electric vehicle charging network and the non-decoy devices comprise electric vehicle charging stations.

In an embodiment, the decoy device uses an attack surface that is weaker than an attack surface used by the non-decoy device.

In an embodiment, the decoy device is to determine that the entity has interfaced with the decoy device and to change from using the first attack surface to the second attack surface based on the determination that the entity has interfaced with the decoy device.

In an embodiment, to execute the mitigation operation, the instructions cause the processor to at least one of: output an alert regarding the access by the entity to the certain device; block access to other devices by the entity; or prevent the entity from accessing the certain device further.

In an embodiment, the instructions cause the processor to: receive data from a plurality of decoy devices, wherein the data comprises information pertaining to identities used by and methods by which a plurality of entities interfaced with the plurality of decoy devices while the plurality of entities were using multiple attack surfaces.

It is also disclosed a method for security of networked systems comprising the following steps: receiving, by a processor, first information pertaining to an identity used by and a method by which an entity interfaced with a decoy device while the decoy device was using a first attack surface, wherein the decoy device emulates a non-decoy device; receiving, by the processor, second information pertaining to an identity used by and a method by which the entity interfaced with the decoy device while the decoy device was using a second attack surface; training, by the processor, a machine learning model using the first information and the second information, wherein the machine learning model is to identify anomalous access to the devices; determining, by the processor and using the machine learning model, whether an access to a certain device is anomalous; and executing, by the processor, a mitigation operation based on a determination that the access to the certain device is anomalous.

In an embodiment, the method further comprises: receiving additional data from the decoy device, wherein the additional data comprises additional information pertaining to an identity used by and a method by which the entity interfaced with the decoy device while the decoy device was using multiple additional attack surfaces; and training the machine learning model using the received additional data.

In an embodiment, the decoy device and the non-decoy device are part of an electric vehicle charging network, and wherein the non-decoy device comprises a vehicle charging station and the decoy device comprises a decoy electric vehicle charging station.

In an embodiment, the decoy device is to emulate a first non-decoy device using the first attack surface and to emulate a second non-decoy device using the second attack surface.

In an embodiment, the method further comprises: receiving additional information from a plurality of decoy devices, wherein the additional information pertains to identities used by and methods by which a plurality of entities interfaced with the plurality of decoy devices while the plurality of entities were using multiple attack surfaces, and wherein the plurality of decoy devices emulate a plurality of non-decoy devices in an organization.

In an embodiment, to execute the mitigation operation, the method further comprises at least one of: outputting an alert regarding the access by the entity to the certain device; blocking access to other devices by the entity; or preventing the entity from further accessing the certain device.

In an embodiment, the method further comprising: determining, using the machine learning model, whether the access to the certain device by the entity is malicious and/or the entity itself is malicious; and executing the mitigation operation based on a determination that the access to the certain device by the entity is malicious and/or the entity itself is malicious.

It is further disclosed a computer-readable medium for security of networked systems on which is stored a plurality of instructions that when executed by a processor, cause the processor to receive first information pertaining to an identity used by and a method by which an entity interfaced with a decoy device while the decoy device was using a first attack surface, wherein the decoy device emulates a non-decoy device; receive second information pertaining to an identity used by and a method by which the entity interfaced with the decoy device while the decoy device was using a second attack surface; train a machine learning model using the first information and the second information, wherein the machine learning model is to identify anomalous access to devices; using the machine learning model to determine whether an access to a certain device is malicious; and execute a mitigation operation based on a determination that the access to the certain device is malicious.

In an embodiment, the instructions stored in the computer-readable medium cause the processor to: receive additional data from the decoy device, wherein the additional data comprises additional information pertaining to an identity used by and a method by which the entity interfaced with the decoy device while the decoy device was using multiple additional attack surfaces; and train the machine learning model using the received additional data.

### Apparatus Components:

Decoy device: simulates operational aspects of network components, creating multiple simulated attack surfaces to attract and analyze potential unauthorized interactions;
Processor: processes interaction data from the decoy device, detailing methods and identities used by entities during their interactions with the simulated environments;
Machine learning model: developed and refined by the processor using interaction data to distinguish between normal and anomalous activities.

### Operational Phases:

Data acquisition: the decoy device presents various attack surfaces, collecting comprehensive data on how each is interacted with, including the tactics and identities used by the entities;
Model training: the processor uses this collected data to train a machine learning model capable of recognizing anomalous access patterns;
Anomaly detection: the model actively monitors access attempts across the network, identifying deviations from recognized patterns;
Mitigation implementation: upon anomaly detection, the processor triggers appropriate countermeasures to prevent or limit unauthorized access;
Response initiation: upon detection of an anomaly, the processor initiates appropriate mitigation operations, such as alert generation, access blocking, or other countermeasures.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

The following figures provide preferred embodiments for illustrating the disclosure and should not be seen as limiting the scope of invention.
**Figure 1****:** shows a block diagram of a network environment, in which an apparatus may collect information from devices in an organization, train a machine learning model using the collected information, and use the machine learning model to determine whether access by an entity to the devices is anomalous, in accordance with an embodiment of the present disclosure.
**Figure 2****:** shows a block diagram of a decoy device, which may be equivalent to the decoy devices depicted in FIG. 1, in accordance with an embodiment of the present disclosure.
**Figure 3****:** depicts a block diagram of the apparatus depicted in FIG. 1, in accordance with an embodiment of the present disclosure.
**Figure 4****:** shows a block diagram of an electric vehicle (EV) charging network security system, in accordance with an embodiment of the present disclosure.
**Figure 5****:** depicts a flow diagram of a method for collecting information from devices in an organization, training a machine learning model using the collected information, and using the machine learning model to determine whether access by an entity to the devices is anomalous, in accordance with an embodiment of the present disclosure.
**Figure 6****:** shows a block diagram of a computer-readable medium that has stored thereon computer-readable instructions for collecting information from devices in an organization, training a machine learning model using the collected information, and using the machine learning model to determine whether access by an entity to the devices is anomalous, in accordance with an embodiment of the present disclosure.

### DETAILED DESCRIPTION

The present disclosure relates to an apparatus includes a processor that may receive data from a decoy device, in which the data may include first information pertaining to an identity used by and a method by which an entity interfaced with the decoy device while the decoy device was using a first attack surface; namely an apparatus for security of an electric vehicle charging network. The data may also include second information pertaining to an identity used by and a method by which the entity interfaced with the decoy device while the decoy device was using a second attack surface. The processor may train a machine learning model using the received data, in which the machine learning model is to identify anomalous access to devices. The processor may also determine, using the machine learning model, whether an access to a certain device, herein also described as a certain device, is anomalous and based on a determination that the access to the certain device is anomalous, execute a mitigation operation.

For simplicity and illustrative purposes, the principles of the present disclosure are described by referring mainly to embodiments and examples thereof. In the following description, numerous specific details are set forth in order to provide an understanding of the embodiments and examples. It will be apparent, however, to one of ordinary skill in the art, that the embodiments and examples may be practiced without limitation to these specific details. In some instances, well known methods and/or structures have not been described in detail so as not to unnecessarily obscure the description of the embodiments and examples. Furthermore, the embodiments and examples may be used together in various combinations.

Disclosed herein are apparatuses and methods to, using a machine learning model to determine whether accesses to devices are anomalous and/or malicious, in which the machine learning model may be trained using information collected from decoy devices. Particularly, the decoy devices may obtain the information from malicious entities while using different types of attack surfaces or pathways used by the malicious entities to interact with the decoy devices. In other words, a decoy device may use a first attack surface during a first interaction with a malicious entity and may collect information regarding an identity used by and a method by which the malicious entity interfaced with the decoy device during the first interaction. The decoy device may also use a second surface (or multiple additional attack surfaces) during a second interaction with the malicious entity and may collect information regarding an identity used by and a method by which the malicious entity interfaced with the decoy device during the second interaction.

As also disclosed herein, a processor may receive the information from the decoy devices and may train the machine learning model with the information such that the machine learning model may learn to identify when malicious entities attack or attempt to attack decoy and/or non-decoy devices. The processor may also receive information from the non-decoy devices and may use that information to train the machine learning model to identify normal behaviour. The processor may further use the machine learning model to determine when anomalous activity has been detected and may execute a mitigation operation based on a determination that the anomalous activity has occurred.

Through implementation of features of the present disclosure, anomalous activity, such as anomalous interactions between entities and devices in an organization, may accurately be identified. For instance, the decoy devices may collect a relatively large amount of information from the malicious entities by changing the attack surfaces that the decoy devices use in the interactions with the malicious entities. That is, the malicious entities may provide the decoy devices with varying information in response to the changes in the attack surfaces, which the processor may use to better train the machine learning model to identify anomalous and/or malicious behaviour. In addition, the decoy devices themselves may reduce or prevent the number of attacks on the non-decoy devices as the malicious entities may target the decoy devices over the non-decoy devices. Accordingly, a technical improvement afforded through implementation of the features of the present disclosure may be that the security on the non-decoy devices may be better protected from malicious entities. This may reduce or prevent the theft of data from the non-decoy devices, the insertion of malicious code into the non-decoy devices, the malicious operations of the non-decoy devices, and/or the like.

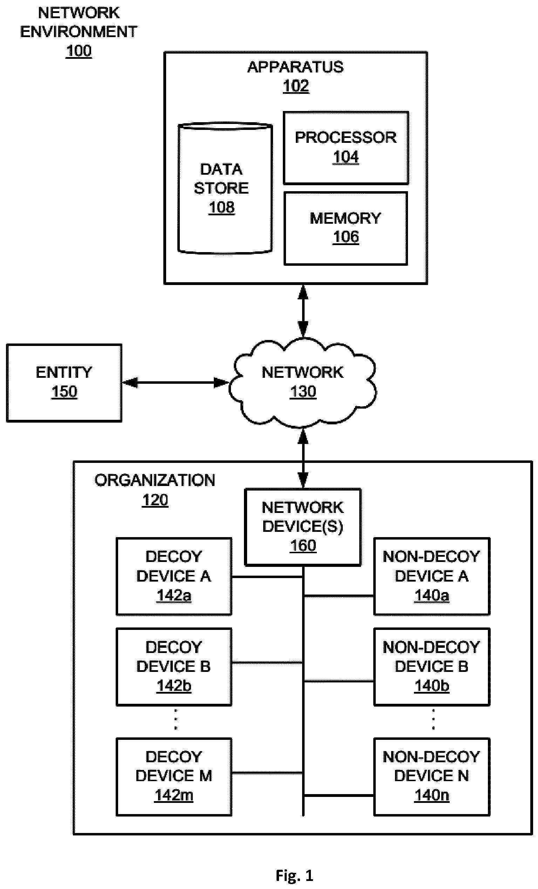

Reference is first made to FIG. 1. FIG. 1 shows a block diagram of a network environment 100, in which an apparatus 102 may collect information from devices in an organization 120, train a machine learning model using the collected information, and use the machine learning model to determine whether access by an entity to the devices is anomalous, in accordance with an embodiment of the present disclosure. It should be understood that the network environment 100 and the apparatus 102 may include additional elements and that some of the elements described herein may be removed and/or modified without departing from the scopes of the network environment 100 and/or the apparatus 102.

The apparatus 102 includes a processor 104 that controls operations of the apparatus 102. The apparatus 102 also includes a memory 106 on which instructions that the processor 104 accesses and/or executes are stored. In addition, the apparatus 102 includes a data store 108 on which the processor 104 stores various information. The processor 104 is a semiconductor-based microprocessor, a central processing unit (CPU), an application specific integrated circuit (ASIC), a field-programmable gate array (FPGA), and/or other hardware device. The memory 106, which may also be termed a computer readable medium, is, for example, a Random Access memory (RAM), an Electrically Erasable Programmable Read-Only Memory (EEPROM), a storage device, or the like. In some examples, the memory 106 is a non-transitory computer readable storage medium, where the term "non-transitory" does not encompass transitory propagating signals. In any regard, the memory 106 has stored thereon machine-readable instructions that the processor 104 executes. The data store 108 may also be a Random Access memory (RAM), an Electrically Erasable Programmable Read-Only Memory (EEPROM), a storage device, or the like.

Although the apparatus 102 is depicted as having a single processor 104, it should be understood that the apparatus 102 may include additional processors and/or cores without departing from a scope of the apparatus 102. In this regard, references to a single processor 104 as well as to a single memory 106 may be understood to additionally or alternatively pertain to multiple processors 104 and/or multiple memories 106. In addition, or alternatively, the processor 104 and the memory 106 may be integrated into a single component, e.g., an integrated circuit on which both the processor 104 and the memory 106 may be provided. In addition, or alternatively, the operations described herein as being performed by the processor 104 are distributed across multiple apparatuses 102 and/or multiple processors 104.

As shown in FIG. 1, the apparatus 102 may be in communication with an organization 120 via a network 130. The network 130 may include the Internet and/or a local area network. In some examples, the apparatus 102 may be part of the organization 120, e.g., may be within a private network with the organization 120. In any of these examples, the organization 120 may be a business, a corporation, a group, a division of a corporation, an institution, etc., that may include a plurality of non-decoy devices 140a-140n located in one or more locations. The one or more locations may include one or more office buildings, factories, stores, electric vehicle charging centers, etc.

The non-decoy devices 140a-140n, in which the variable "n" represents a value greater than one, may be physical devices of the organization 120 that may be accessed through the network 130 via one or more network devices 160. The network device(s) 160 may include one or more gateways, access points, switches, firewalls, etc. The non-decoy devices 140a-140n may include servers, computing devices (such as laptops, smartphones, smart watches, tablet computers, etc.), Internet of Things (IoT) devices, robotic devices, manufacturing equipment, environmental sensors, physical sensors, thermostats, environmental conditioning devices, electric vehicle charging stations, network attached data storage devices, and/or the like. In other words, the non-decoy devices 140a-140n may be devices that may be accessed via the network 130 to obtain information from the non-decoy devices 140a-140n, to control the non-decoy devices 140a-140n, to update the non-decoy devices 140a-140n, etc.

In many instances, access to the non-decoy devices 140a-140n may be protected through use of various protection mechanisms. For instance, a user may be required to be authenticated by providing a valid set of credentials prior to being granted access to the non-decoy devices 140a-140n. By way of example, the user may be required to input a valid user name, password, one time code, etc., in or der to gain access to the non-decoy devices 140a-140n. Access to the non-decoy devices 140a-140n may include any of the retrieval of information stored on or accessible on the non-decoy devices 140a-140n, the control of an action performed by the non-decoy devices 140a-140n, the changing of information stored on the non-decoy devices 140a-140n, etc.

In some instances, an entity 150, which may also be termed a malicious entity 150, may attempt to access one or more of the non-decoy devices 140a-140n for any of a number of malicious purposes. For instance, the entity 150, which may be a person, a software application, a computing device through which the person or software application is to connect to the network 130, may attempt to access one or more of the non-decoy devices 140a-140n to obtain private or confidential information, to obtain personal information that may be used to steal users' identities, to obtain private credit card information, to control the one or more non-decoy devices 140a-140n to operate in an unusual or unsafe manner, etc. In addition, the entity 150 may attempt to access one or more of the non-decoy devices 140a-140n through any of a number of known and heretofore known manners.

According to examples disclosed herein, the apparatus 102 may reduce or prevent attacks made on the non-decoy devices 140a-140n and/or may mitigate potential harm caused when attacks on the non-decoy devices 140a-140n are successful. As discussed herein, the apparatus 102 may work with non-decoy devices 142a-142m that emulate some or all of the non-decoy devices 140a-140n. particularly, the decoy devices 142a-142m, in which the variable "m" may represent a value greater than one, may emulate or mimic one or more of the non-decoy devices 140a-140n. The decoy devices 142a-142m may emulate the non-decoy devices 140a-140n by appearing to be similar types of devices as the non-decoy devices 140a-140n. For instance, the decoy devices 142a-142m may be assigned identification information, e.g., device names, IP addresses, port numbers, etc., that may be the same as or similar to the identification information assigned to the non-decoy devices 140a-140n.

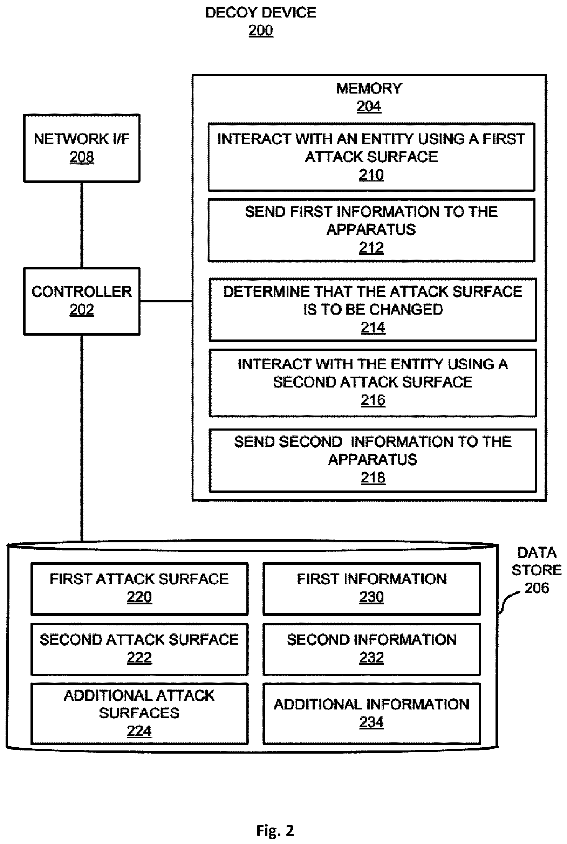

In some examples, the decoy devices 142a-142m may be relatively simple computing devices as discussed herein with respect to FIG. 2. In addition, the decoy devices 142a-142m may be network targets that appear to be legitimate network targets. In this regard, the decoy devices 142a-142m may have simulated data and characteristics and thus, if the decoy devices 142a-142m are attacked, attackers may only obtain simulated data and/or access simulated characteristics. As a result, any actual attacks on the decoy devices 142a-142m may not result in the compromise of real information or access to real characteristics of a non-decoy device. Additionally, any network traffic may be monitored and investigated in detail.

In some examples, the decoy devices 142a-142m may physically be located within the same local area network as the non-decoy devices 140a-140n to better emulate the non-decoy devices 140a-140n. In this regard, for instance, the decoy devices 142a-142m may share common network identifiers with the non-decoy devices 140a-140n. This may make it more likely that entities 150, such as malicious entities 150, are unable to distinguish the decoy devices 142a-142m from the non-decoy devices 140a-140n and to thus attack the decoy devices 142a-142m more readily. In addition, to make it more likely that the entities 150 attempt to access the decoy devices 142a-142m over the non-decoy devices 140a-140n, the decoy devices 142a-142m may be provided with attack surfaces that are simpler to hack or overcome than the attack surfaces of the non-decoy devices 140a-140n. In other words, the decoy devices 142a-142m may have a sum of vulnerabilities, such as pathways or methods (e.g., attack vectors), that hackers may use to gain unauthorized access to the decoy devices 142a-142m that may be simpler to overcome than the attack surfaces of the non-decoy devices 140a-140n.

For instance, the non-decoy devices 140a-140n may have one or more additional protection requirements, such as a requirement for an additional credential. The additional credential may be a one-time-code, a token available from a physical device, a third-party authentication requirement, and/or the like. The protection requirement may additionally or alternatively include a longer or more complicated password. In addition, or alternatively, the decoy devices 142a-142m may be protected using well-known passwords, credentials that are known to have been compromised, etc. In one regard, the decoy devices 142a-142m may be honeypots that may lure malicious entities 150 away from the non-decoy devices 140a-140n.

Turning now to FIG. 2, there is shown a block diagram of a decoy device 200, which may be equivalent to the decoy devices 142a-142m depicted in FIG. 1, in accordance with an embodiment of the present disclosure. It should be understood that the decoy device 200 may include additional elements and that some of the elements described herein may be removed and/or modified without departing from a scope of the decoy device 200. The description of the decoy device 200 is also made with respect to features shown in FIG. 1.

As shown in FIG. 2, the decoy device 200 includes a controller 202 that controls operations of the decoy device 200. The decoy device 200 also includes a memory 204 on which instructions that the controller 202 accesses and/or executes are stored. In addition, the decoy device 200 includes a data store 206 on which the controller 202 stores various information and a network interface (I/F) 208 through which data, e.g., IP packets, may be received into and sent out from the controller 202. The controller is a semiconductor-based microprocessor, a central processing unit (CPU), an application specific integrated circuit (ASIC), a field-programmable gate array (FPGA), and/or other hardware device. In some examples, the controller 202 may be a relatively simple controller, such as a Raspberry Pi controller.

The memory 204, which may also be termed a computer readable medium, is, for example, a Random Access memory (RAM), an Electrically Erasable Programmable Read-Only Memory (EEPROM), a storage device, or the like. In some examples, the memory 204 is a non-transitory computer readable storage medium, where the term "non-transitory" does not encompass transitory propagating signals. In any regard, the memory 204 may have stored thereon machine-readable instructions that the controller 202 executes. The data store 206 may also be a Random Access memory (RAM), an Electrically Erasable Programmable Read-Only Memory (EEPROM), a storage device, or the like.

The memory 204 of the decoy device 200 is depicted as having stored thereon machine-readable instructions 210-218 that the controller 202 is to execute. Although the instructions 210-218 are described herein as being stored on the memory 204 and thus include a set of machine-readable instructions, the decoy device 200 may include hardware logic blocks that may perform functions similar to the instructions 210-218. For instance, the controller 202 may include hardware components that may execute the instructions 210-218. In other examples, the decoy device 200 may include a combination of instructions and hardware logic blocks to implement or execute functions corresponding to the instructions 210-218. In any of these examples, the controller 202 may implement the hardware logic blocks and/or execute the instructions 210-218. As discussed herein, the decoy device 200 may also include additional instructions and/or hardware logic blocks such that the controller 202 may execute operations in addition to or in place of those discussed above with respect to FIG. 2.

The controller 202 may execute the instructions 210 to interact with an entity 150 using a first attack surface 220. That is, the entity 150, which may be a malicious entity 150, may have gained access to the decoy device 200 through the network interface (IF) 208. In addition, the controller 202 may have presented to the malicious entity 150 various information directed to a certain vulnerability pathway to the decoy device 200. The various information may include a first identifier of the decoy device 200, which may identify a type of the device that the decoy device 200 is emulating during the interaction. The various information may also include a first IP address of the decoy device 200, data and information relevant to a service or protocol being emulated, e.g., protocol banner, initial protocol shell, commands, etc.

During the interaction, the controller 202 may also receive first information 230 from the malicious entity 150. The first information 230 may pertain to an identity used by and a method by which the entity 150 interfaced with the decoy device 200 while the decoy device 200 was using the first attack surface. The first information 230 may thus include, for instance, the IP address of the entity 150, a name of the entity 150, a MAC address of the entity 150, an email address of the entity 150, a geographic location of the entity 150, and/or the like. The method by which the entity 150 interfaced with the decoy device 200 may include the path that the entity 150 used to access the decoy device 200, the credentials that the entity 150 provided to access the decoy device 200, the authentication process that the entity 150 underwent, the types of actions that the entity 150 performed or attempted to perform on the decoy device 200, emulated device protocol communication metadata (e.g., commands, payloads, and other protocol information), and/or the like. As shown in FIG. 2, the first attack surface 220 and the first information 230 may be stored in the data store 206.

The controller 202 may execute the instructions 212 to send the first information 230 pertaining to an identity used by and a method by which the entity 150 interfaced with the decoy device 200 while the decoy device 200 was using the first attack surface 220 to the apparatus 102. Particularly, the controller 202 may cause the first information 230 to be communicated to the apparatus 102 through the network I/F 208 and the network 130. The controller 202 may additionally communicate information pertaining to the first attack surface 220.

The controller 202 may execute the instructions 214 to determine that the attack surface used by the decoy device 200 is to be changed. In some examples, the controller 202 may determine that the attack surface used by the decoy device 200 is to be changed any time the controller 202 interfaces with an entity 150. In these examples, the instructions 214 may be omitted and the controller 202 may change the attack surface after a certain amount of time has elapsed since the controller 202 started interacting with the entity 150. In other examples, the controller 202 may determine that the attack surface used by the decoy device 200 is to be changed based on a determination that the entity 150 is likely malicious. For instance, the apparatus 102 may determine, from the first information 230, that the entity 150 is likely malicious, or at least anomalous, and may send an indication to the controller 202 that the entity 150 is likely malicious. The apparatus 102 may make this determination through use of a machine learning model as discussed herein.

The controller 202 may execute the instructions 216 to interact with the entity 150 using a second attack surface 222. The second attack surface 222 may differ from the first attack surface 220 in that, for instance, the second attack surface 222 may mimic or emulate a type of non-decoy device 140b that differs from the type of non-decoy device 140a emulated in the first attack surface 220. In this regard, the second attack surface 222 may include a second identifier of the decoy device 200, which may identify another type of the device that the decoy device 200 is emulating during the interaction.

During the interaction using the second attack surface 222, the controller 202 may also receive second information 232 from the malicious entity 150. The second information 232 may pertain to an identity used by and a method by which the entity 150 interfaced with the decoy device 200 while the decoy device 200 was using the second attack surface. The malicious entity 150 may employ different attach pathways, vectors, etc., in response to the decoy device 200 using the second attack surface 222. The second information 230 may include, for instance, the IP address of the entity 150, a name of the entity 150, a MAC address of the entity 150, an email address of the entity 150, a geographic location of the entity 150, and/or the like. The method by which the entity 150 interfaced with the decoy device 200 may include the path that the entity 150 used to access the decoy device 200, the credentials that the entity 150 provided to access the decoy device 200, the authentication process that the entity 150 underwent, the types of actions that the entity 150 performed or attempted to perform on the decoy device 200, emulated device protocol communication metadata (e.g., commands, payloads, and other protocol information), and/or the like. As shown in FIG. 2, the second attack surface 222 and the second information 232 may be stored in the data store 206.

A protocol used in the present disclosure may include, but not be limited to, http (Hypertext Transfer Protocol), https (Hypertext transfer protocol secure), ocpp (Open Charge Point Protocol), SMB (Server Message Block), rdp (Remote Desktop Protocol), or ModBus (an industrial client/server data communications protocol).

A protocol used in the present disclosure may be on or above network layer (OSI layer 3), from network layer (OSI layer 3) to session layer (OSI layer 5), preferably at least in the network layer (OSI layer 3) and transport layer (OSI layer 4), in particular present in the application layer (OSI layer 7, for example ModBus or OCPP).

The controller 202 may execute the instructions 218 to send the second information 232 pertaining to an identity used by and a method by which the entity 150 interfaced with the decoy device 200 while the decoy device 200 was using the second attack surface 220 to the apparatus 102. In some instances, the entity 150 may change the identity and/or the method by which the entity 150 interfaced with the decoy device 200 in response to the decoy device 200 using the second attack surface 222. The controller 202 may cause the second information 232 to be communicated to the apparatus 102 through the network I/F 208 and the network 130. The controller 202 may additionally communicate information pertaining to the second attack surface 222.

Although not explicitly shown in FIG. 2, the controller 202 may further interface with the entity 150 using additional attack surfaces 224 and may identify additional information 234 regarding the entity 150 while using the additional attack surfaces 224. The controller 202 may also communicate the additional information 234 to the apparatus 102. In one regard, the decoy device 200 may employ a moving target defense against the entity 150, which may confuse the entity 150 and may delay an attack by the entity 150. Additionally, the controller 202 may obtain information pertaining to how the entity 150 attacks different types of devices, which the apparatus 102 may use to better train a machine learning model to identify when attacks have occurred or are occurring.

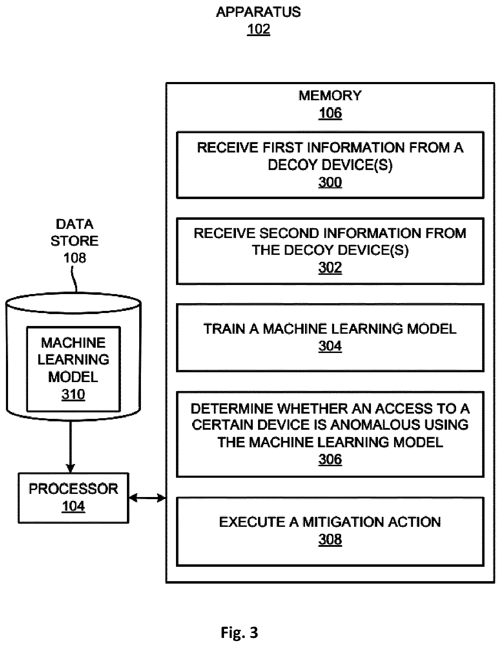

Turning now to FIG. 3, there is shown a block diagram of the apparatus 102 depicted in FIG. 1, in accordance with an embodiment of the present disclosure. The description of FIG. 3 is made with reference to the features depicted in FIGS. 1 and 2.

As shown in FIG. 3, the memory 106 of the apparatus 102 is depicted as having stored thereon machine-readable instructions 300-308 that the processor 104 is to execute. Although the instructions 300-308 are described herein as being stored on the memory 106 and thus include a set of machine-readable instructions, the apparatus 102 may include hardware logic blocks that may perform functions similar to the instructions 300-308. For instance, the processor 104 may include hardware components that may execute the instructions 300-308. In other examples, the apparatus 102 may include a combination of instructions and hardware logic blocks to implement or execute functions corresponding to the instructions 300-308. In any of these examples, the processor 104 may implement the hardware logic blocks and/or execute the instructions 300-308. As discussed herein, the apparatus 102 may also include additional instructions and/or hardware logic blocks such that the processor 104 may execute operations in addition to or in place of those discussed above with respect to FIG. 3.

The processor 104 may execute the instructions 300 to receive first information 230 from a decoy device 200. As discussed herein, the first information 230 may pertain to an identity used by and a method by which an entity 150 interfaced with the decoy device 200 while the decoy device was using a first attack surface 220.

The processor 104 may execute the instructions 302 to receive second information 232 from the decoy device 200. As discussed herein, the second information 232 may pertain to an identity used by and a method by which the entity 150 interfaced with the decoy device 200 while the decoy device 200 was using a second attack surface 222.

The processor 104 may execute the instructions 304 to train a machine learning model 310 using the received data, in which the machine learning model 310 may be used to identify anomalous (and/or malicious) access to devices. The processor 104 may also use the machine learning model 310 to identify anomalous (and/or malicious) behaviour on the other decoy devices 142a-142m as well as non-decoy devices 140a-140n by entities 150. The processor 104 may also use information obtained from other decoy devices 142a-142m and non-decoy devices 140a-140n to train the machine learning model 310. The controller 202 may train the machine learning model 310 through application of any suitable machine learning algorithm, such as, linear regression, Naive Bayes, K-means, random forest, logistic regression, or the like.

In some examples, the machine learning model 310 may learn normal behaviour associated with interactions between entities 150 and the non-decoy devices 140a-140n through application of a machine learning operation on past behaviour associated with the interactions. That is, the processor 104 may apply a machine learning operation on information corresponding to the past behaviour to determine the learned behaviour. The past behaviour may be the past behaviour of authorized users of the organization 120, for instance. In some examples, the processor 104 may provide feature vectors of elements corresponding to the past behaviour into the machine learning operation and the machine learning operation may determine the learned behaviour from the feature vectors.

In some examples, the processor 104 may receive additional data from one or more of the decoy devices 142a-142m, in which the additional data may include additional information 234 pertaining to identities used by and methods by which one or more entities 150 interfaced with the one or more decoy devices 142a-142 while the decoy devices 142a-142m were using multiple additional attack surfaces 224. In addition, the processor 104 may train the machine learning model 310 using the received additional data. In this regard, the processor 104 may train the machine learning model 310 with the additional data, which may improve the accuracy of the machine learning model 310.

The processor 104 may execute the instructions 306 to determine, using the machine learning model 310, whether an access to a certain device is anomalous, in which the certain device may be a decoy device 142a-142m or a non-decoy device 140a-140n.. That is, for instance, the processor 104 may receive information from the certain device pertaining to an identity used by and/or a method by which an entity 150 interfaced with the certain device. The processor 104 may input the information into the machine learning model 310, which may determine whether the information indicates that the interface falls under normal behavior or is anomalous (and/or malicious). Based on a determination that the interface falls under normal behavior, the processor 104 may not interfere with or otherwise identify the interface as being anomalous.

In some examples, the machine learning model 310 may identify new types of attacks and/or previously known types of attacks on the certain device. For instance, the machine learning model 310 may have learned or may have been programmed with code regarding known types of attacks. The machine learning model 310 may also determine, from the inputted information, when conditions may exist for a new type of attack.

However, the processor 104 may execute the instructions 308 to execute a mitigation action based on a determination that the access to the certain device is anomalous (and/or malicious). The processor 104 may output an alert regarding the access by the entity 150 to the certain device. For instance, the processor 104 may output an alert to an IT administrator of the organization 120, a security team of the organization 120, a database on which such alerts are stored, etc. In addition, or alternatively, the processor 104 may block access to other devices by the entity 150. For instance, the processor 104 may block access to a local network of the organization 120 by the entity 150. In addition, or alternatively, the processor 104 may prevent the entity 150 from further accessing the certain device. For instance, the processor 104 may block access by the entity 150 to the certain device by causing the network device 160 to block any IP packets sent from the entity 150 from reaching the certain device.

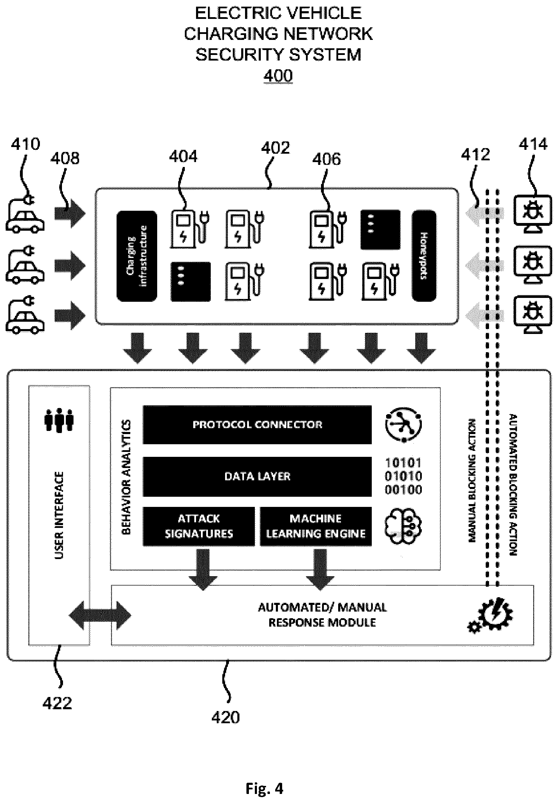

Reference is now made to FIG. 4, which shows a block diagram of an electric vehicle (EV) charging network security system 400, in accordance with an embodiment of the present disclosure. The EV charging network security system 400 may be a specific implementation of the network environment 100 depicted in FIG. 1. The EV charging network security system 400 may include an EV charging infrastructure 402 and an apparatus 420 that may collect information from the EV charging infrastructure 402, train a machine learning model 310, and use the machine learning model 310 to identify when attacks are occurring or may have occurred.

As shown in FIG. 4, the EV charging infrastructure 402 may include a plurality of EV charging stations 404 and a plurality of decoy EV charging stations 406. The EV charging stations 404 may be equivalent to the non-decoy devices 140a-140n and the decoy EV charging stations 406 may be equivalent to the decoy devices 142a-142m discussed herein with respect to FIGS. 1-3. In this regard, the decoy EV charging stations 406 may emulate one or more of the EV charging stations 404 and may employ a moving target defense, e.g., may change the attack surfaces used in interactions with potentially malicious entities 150, 414.

According to examples, the EV charging stations 406 may collect information 408 pertaining to charging sessions of EVs 410, which may include either or both of real charging sessions and simulated charging sessions. For instance, controllers 202 in the EV charging stations 406 may collect the information 408 and may communicate the information 408 to the apparatus 420. In addition, the decoy EV charging stations 406, which may emulate the EV charging stations 406, may collect information 412 pertaining to interactions by entities 414 with the decoy EV charging stations 406 and the EV charging stations 404. The decoy EV charging stations 406 may also communicate the information 412 to the apparatus 420.

The apparatus 420, and more particularly, one or more processors (such as a processor 104) in the apparatus 420 may use the information 408 to, for instance, determine normal EV charging behaviour. For instance, behaviour analytics may be applied on the information 408 to identify the normal EV charging behaviour, which may include normal interactions with the EV charging stations 404. In addition, the apparatus 420 may use the information 412 to train the machine learning engine (which may be equivalent to the machine learning model 310) in manners similar to those discussed above with respect to the machine learning model 310. Additionally, the apparatus 420 may determine whether an interaction by an entity 414 is anomalous (or malicious) and may cause a mitigation operation to be implemented. For instance, the apparatus 420 may cause an alert to be outputted through a user interface 422. In some examples, a user may cause a manual response to implemented and/or may confirm that an automated response is to be performed. The responses may be blocking actions that may stop a current interaction by a potentially malicious entity 414 with the charging infrastructure 402 and/or may prevent a future interaction from occurring. In some examples, some attack signatures may be known and the apparatus 420 may determine when certain interactions have the known attack signatures. In these instances, the apparatus 420 may cause a mitigation operation to be executed.

The behaviour analytics captures changes from the standard, or baseline behaviour of the network as a whole and its constituent agents.

In an embodiment, the behaviour analytics comprises machine learning models trained on patterns of the network's normal behaviour, both static and/or dynamic behaviour, and then detect anomalies on live traffic and behaviour.

In an embodiment, the anomalies are events such as new agent in the network or more complex events such as a change in the standard deviation of some distribution characterising the communication between two network agents.

In an embodiment, the machine learning model for the behaviour analytics is selected from an unsupervised machine-learning model suited for detect anomalies in sequences of keys, e.g. [A B B X], and values, e.g. [[0.1, 0.1], [02, 0.9]].

In an embodiment, the machine learning model for the behaviour analytics is selected from a list comprising: an unsupervised machine-learning model for this task, ranging from classical tabular based methods such as k-Nearest-Neighbours, Isolation Forest, ECOD (Empirical Cumulative Distribution Functions) to graph-based methods that encode the topological nature of a network such as Convolutional Graph Neural Networks. In order to encode the graph nature of the networks under study into a tabular format processable by Neural Network ML architectures, the adjacency matrix representation of finite graphs (possibly bipartite or multiedge) is used. For specific protocols that transmit session-based data between two agents, we employ efficient deep learning algorithms such as DeepLog (belonging to the family of Long-Short Term Memory networks) that learn typical behaviour of time-sequence data (message order, values order) in these session-based conversations. To make the system learn from (very few) well tagged attack anomalous samples, the detection pipeline may comprise semi-supervised methods such as one-class SVD or meta-learning algorithms. For the Explainability Feature, an array of detected events is fed to pre-train Large Language Models of the Transformer architecture. LLMs are also helpful in parsing communication protocols to build features for the model.

Features may include aggregated stream or packet data provided by network traffic analysis, at the network and/or transport layers. These may be tabular data or graph-based data; data which is supplied to tabular anomaly detection/outlier detection algorithms that learn from past normal behaviour and detect anomalous behaviour at the packet/aggregation level, or data which is supplied to graph neural networks, where each instance is an adjacency matrix representation of the network graph representation at each time, which encode topology, correlations and changes to them.

Features may include features modelled by time-series anomaly detection models such as DeepLog, which are suited for the application layer, such as ModBus. For example, ModBus features may include Eventlld, Timestamp, Session Id, Client Id , LogKey - Categorical Variable: Command (Read input, read register, write coil, ...), LogValue - Numerical Variable (when reading data this could be an array representing 'Temperature' and 'Humidity'). For example, OCPP features, used to extract categorical and numerical features of interest, may include Command features: Authorize; StartTransaction; StatusNotification; MeterValues; MeterValues, or Payload features: EnergyActivelmport; PowerActive; ChargingPercentage, or combinations thereof.

DeepLog is, for example, described in the following citation which is hereby incorporated by reference in its entirety: Min Du, Feifei Li, Guineng Zheng, and Vivek Srikumar. 2017. DeepLog: Anomaly Detection and Diagnosis from System Logs through Deep Learning. In Proceedings of the 2017 ACM SIGSAC Conference on Computer and Communications Security (CCS '17). Association for Computing Machinery, New York, NY, USA, 1285-1298. https://doi.org/10.1145/3133956.3134015.

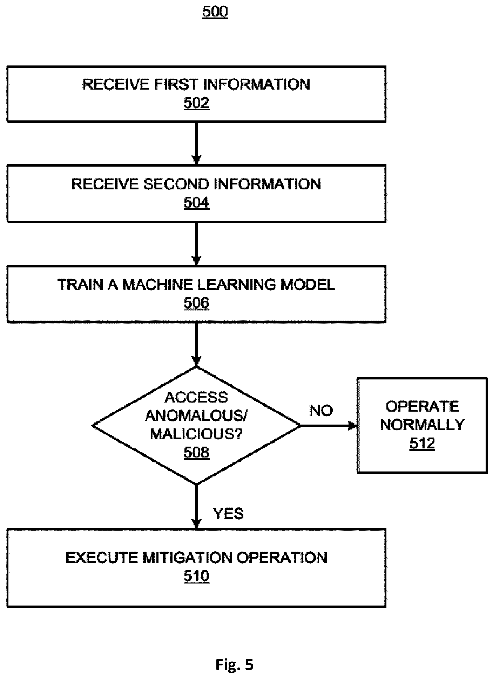

Various manners in which the processor 104 of the apparatus 102 may operate are discussed in greater detail with respect to the method 500 depicted in FIG. 5. Particularly, FIG. 5 depicts a flow diagram of a method 500 for collecting information from devices in an organization 120, training a machine learning model 310 using the collected information, and using the machine learning model 310 to determine whether access by an entity to the devices is anomalous, in accordance with an embodiment of the present disclosure. It should be understood that the method 500 may include additional operations and that some of the operations described therein may be removed and/or modified without departing from the scope of the method 500. The description of the method 500 is made with reference to the features depicted in FIGS. 1-4 for purposes of illustration.

At block 502, the processor 104 may receive first information 230 pertaining to an identity used by and a method by which an entity 150 interfaced with a decoy device 200 while the decoy device 200 was using a first attack surface 220. As disclosed herein, the decoy device 200 may emulate one or more non-decoy devices 140a-140n. In some examples, the decoy device 200 may be a decoy EV charging device 406 and the one or more non-decoy devices 140a-140n may be EV charging stations 404.

At block 504, the processor 104 may receive second information 232 pertaining to an identity used by and a method by which the entity 150 interfaced with the decoy device 200 while the decoy device 200 was using a second attack surface 222.

At block 506, the processor 104 may train a machine learning model 310 using the first information 230 and the second information 232, in which the machine learning model 310 is to identify anomalous (and/or malicious) access to devices, which may include the non-decoy devices 140a-140n and the decoy devices 142a-142m. In some examples, the processor 104 may receive additional information from one or more of the decoy devices 142a-142m, in which the additional information 234 may pertain to an identity used by and a method by which the entity 150 interfaced with the one or more decoy devices 142a-142m while the one or more decoy devices 142a-142m were using multiple additional attack surfaces 224. The processor 104 may also train the machine learning model 310 using the received additional information 234. The processor 104 may also receive information from the non-decoy devices 140a-140n and may use that information to train the machine learning model 310. For instance, the information from the non-decoy devices 140a-140n may be used to train the machine learning model 310 to identify normal behaviours.

At block 508, the processor 104 may determine, using the machine learning model 310, whether an access to a certain device is anomalous (and/or malicious). The certain device may be a non-decoy device 140a-140n or a decoy device 142a-142m.

At block 510, the processor 104 may execute a mitigation operation based on a determination that the access to the certain device is anomalous (and/or malicious) based on a determination that the access to the certain device is anomalous (and/or malicious). In some examples, the processor 104 may use the machine learning model 310 to determine whether the access to the certain device is malicious and/or the entity 150 itself is malicious. In these examples, the processor 104 may execute the mitigation operation based on a determination that the access to the certain device by the entity is malicious and/or the entity itself is malicious. However, based on a determination that the access to the certain device is not anomalous (and/or malicious), at block 512, the processor 104 may enable the interaction between the entity 150 and the certain device to operate normally.

In some examples, some or all of the operations set forth in the method 500 are included as utilities, programs, or subprograms, in any desired computer accessible medium. In some examples, the method 500 may be embodied by computer programs, which may exist in a variety of forms both active and inactive. For example, the computer programs exist as machine-readable instructions, including source code, object code, executable code or other formats. Any of the above, in some examples, are embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

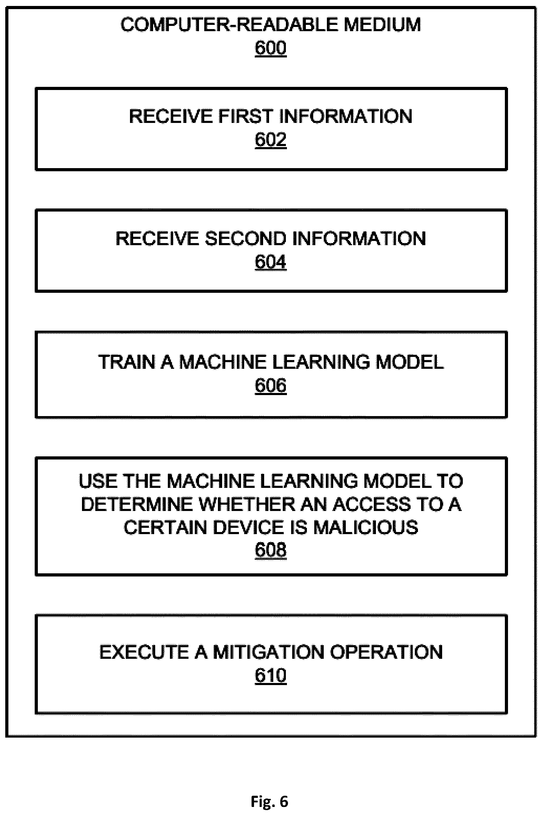

Turning now to FIG. 6, there is shown a block diagram of a computer-readable medium 600 that has stored thereon computer-readable instructions for collecting information from devices in an organization 120, training a machine learning model 310 using the collected information, and using the machine learning model 310 to determine whether access by an entity to the devices is anomalous, in accordance with an embodiment of the present disclosure. It should be understood that the computer-readable medium 600 depicted in FIG. 6 may include additional instructions and that some of the instructions described herein may be removed and/or modified without departing from the scope of the computer-readable medium 600 disclosed herein. In some examples, the computer-readable medium 600 is a non-transitory computer-readable medium, in which the term "non-transitory" does not encompass transitory propagating signals.

As shown in FIG. 6, the computer-readable medium 600 has stored thereon computer-readable instructions 602-610 that a processor, such as a processor 104 of the apparatus 102 depicted in FIGS. 1 and 3, executes. The computer-readable medium 600 may be an electronic, magnetic, optical, or other physical storage device that contains or stores executable instructions. The computer-readable medium 600 is, for example, Random Access memory (RAM), an Electrically Erasable Programmable Read-Only Memory (EEPROM), a storage device, an optical disc, and the like.

The processor may execute the instructions 602 to receive first information 230 pertaining to an identity used by and a method by which an entity 150 interfaced with a decoy device 200 while the decoy device 200 was using a first attack surface 220, in which the decoy device 200 emulates a non-decoy device 140a. The processor may execute the instructions 604 to receive second information 232 pertaining to an identity used by and a method by which the entity 150 interfaced with the decoy device 200 while the decoy device 200 was using a second attack surface 222. The processor may also receive additional information 234 pertaining to identities used by and methods by which the entity 150 interfaced with the decoy device 200 while the decoy device 200 was using additional attack surfaces 224.

The processor may execute the instructions 606 to train a machine learning model 310 using the first information 230 and the second information 232, in which the machine learning model 310 may identify anomalous access to devices. In some examples, the processor may also use the additional information and/or information collected from non-decoy devices 140a-140n. As discussed herein, the non-decoy devices 140a-140n may be EV charging stations 404 and the decoy devices 142a-142m may be decoy EV charging stations 406.

The processor may execute the instructions 608 to use the machine learning model 310 to determine whether an access to a certain device is malicious. In addition, the processor may execute the instructions 610 to execute a mitigation operation based on a determination that the access to the certain device is malicious.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions and figures used herein are set forth by way of illustration only and are not meant as limitations. Many variations are possible within the scope of the disclosure, which is intended to be defined by the following claims -- and their equivalents -- in which all terms are meant in their broadest reasonable sense unless otherwise indicated.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof. The above described embodiments are combinable. The following claims further set out particular embodiments of the disclosure.

## Claims

1. An apparatus for detecting and mitigating anomalous access in a computer network, comprising:
a processor; and
a memory on which is stored machine-readable instructions that when executed by the processor, cause the processor to carry out the method of:
determine, using a pretrained machine learning model, whether an access to a certain device is anomalous; and
based on a determination that the access to the certain device is anomalous, execute a computer network mitigation operation;
wherein the pretrained machine learning model has been previously trained by:
receiving data from a decoy device, wherein the data comprises:
first information pertaining to an identity used by and a method by which an entity interfaced with the decoy device while the decoy device was using a first attack surface;
training the machine learning model using the received data, wherein the machine learning model is to identify anomalous access to devices.

2. The apparatus according to any of the previous claims, wherein the pretrained machine learning model has been previously trained by:
receiving data from a decoy device, wherein the data comprises:
first information pertaining to an identity used by and a method by which an entity interfaced with the decoy device while the decoy device was using a first attack surface;
receiving data from a non-decoy device, wherein the data comprises:
second information pertaining to an identity used by and a method by which an entity interfaced with the non-decoy device while the non-decoy device was using a second attack surface;
training the machine learning model using the received data from the decoy device and from the non-decoy device, wherein the machine learning model is to identify anomalous access to devices by distinguishing between data received from the decoy device and data received from the non-decoy device.

3. The apparatus according to any of the previous claims, wherein the apparatus for detecting and mitigating anomalous access is a decoy device, and the method further comprises:
determine, using a trained machine learning model, whether an access to the apparatus is anomalous; and
based on a determination that the access to the apparatus is anomalous, execute a computer network mitigation operation.

4. The apparatus according to any of the previous claims, wherein the decoy device is arranged to emulate a first non-decoy device by emulating the first attack surface as an attack surface of the first non-decoy device.

5. The apparatus according to any of the previous claims, wherein the data further comprises second information pertaining to an identity used by and a method by which the entity interfaced with the decoy device while the decoy device was using a second attack surface, in particular the pretrained machine learning model has been further trained by:
receiving additional data from the decoy device, wherein the additional data comprises additional information pertaining to an identity used by and a method by which the entity interfaced with the decoy device while the decoy device was using multiple additional attack surfaces; and
training the machine learning model using the received additional data.

6. The apparatus according to any of the previous claims, wherein the first attack surface, and the second attack surface if existing, each comprises at least one of a pathway, a vulnerability, in particular by traffic volume, by online availability, and a method that the entity used to gain access to the decoy device, in particular said pathway comprising a network protocol, a protocol handshake, a network session, a user login.

7. The apparatus according to any of the previous claims wherein the decoy device is within a common organization as non-decoy devices and wherein the decoy device is to emulate one or more of the non-decoy devices, preferably wherein the organization comprises an electric vehicle charging network and the non-decoy devices comprise electric vehicle charging stations; more preferably wherein the decoy device uses an attack surface that is weaker than an attack surface used by the non-decoy device.

8. The apparatus according to claim 2 or 5, wherein the decoy device is to determine that the entity has interfaced with the decoy device and to change from using the first attack surface to the second attack surface based on the determination that the entity has interfaced with the decoy device.

9. The apparatus according to any of the previous claims, wherein, to execute the mitigation operation, the instructions cause the processor to at least one of:
output an alert regarding the access by the entity to the certain device;
block access to other devices by the entity; or
prevent the entity from accessing the certain device further.

10. A method for detecting and mitigating anomalous access in a computer network, comprising the following steps:
determining, by a processor and using a pretrained machine learning model, whether an access to a certain device is anomalous; and
executing, by the processor, a computer network mitigation operation based on a determination that the access to the certain device is anomalous;
wherein the pretrained machine learning model has been previously trained by:
receiving, by a processor, first information pertaining to an identity used by and a method by which an entity interfaced with a decoy device while the decoy device was using a first attack surface, wherein the decoy device emulates a non-decoy device;
receiving, by the processor, second information pertaining to an identity used by and a method by which the entity interfaced with the decoy device while the decoy device was using a second attack surface;
training, by the processor, a machine learning model using the first information and the second information, wherein the machine learning model is to identify anomalous access to the devices.

11. The method according to the previous claim, wherein the pretrained machine learning model has been previously trained by:
receiving data from a decoy device, wherein the data comprises:
first information pertaining to an identity used by and a method by which an entity interfaced with the decoy device while the decoy device was using a first attack surface;
receiving data from a non-decoy device, wherein the data comprises:
second information pertaining to an identity used by and a method by which an entity interfaced with the non-decoy device while the non-decoy device was using a second attack surface;
training the machine learning model using the received data from the decoy device and from the non-decoy device, wherein the machine learning model is to identify anomalous access to devices by distinguishing between data received from the decoy device and data received from the non-decoy device.

12. The method according to any of the claims 10-11, wherein the decoy device is to emulate a first non-decoy device using the first attack surface and to emulate a second non-decoy device using the second attack surface.

13. The method according to any of the claims 10-12, wherein, to execute the mitigation operation, the method further comprises at least one of:
outputting an alert regarding the access by the entity to the second device;
blocking access to other devices by the entity; or
preventing the entity from further accessing the second device.

14. The method according to any of the claims 10-13, further comprising:
determining, using the machine learning model, whether the access to the second device by the entity is malicious and/or the entity itself is malicious; and
executing the mitigation operation based on a determination that the access to the second device by the entity is malicious and/or the entity itself is malicious.

15. A computer-readable non-transitory medium on which is stored a plurality of computer instructions that when executed by a processor, cause the processor to carry out the method of any of the claims 10-14.
